# EUROPÄISCHE PATENTSCHRIFT

(11) **EP 1 826 889 B1**
(45) Veröffentlichungstag und Bekanntmachung des Hinweises auf die Patenterteilung: **30.09.2015**
(21) Anmeldenummer: 06007298.0
(22) Anmeldetag: 06.04.2006
(51) Int. Cl.: H02K 15/03

(54) **Verfahren und Vorrichtung zum Anbringen von Magneten**
Method and apparatus for mounting magnets
Méthode et dispositif pour monter des aimants

(30) Priorität: 24.02.2006 EP 06003785
(43) Veröffentlichungstag der Anmeldung: 29.08.2007
(73) Patentinhaber: ThyssenKrupp Aufzugswerke GmbH, 73765 Neuhausen a.d.F. (DE)
(72) Erfinder: Barthelmie, Frank, 73760 Ostfildern (DE); Schulze, Jochen, 72770 Reutlingen (DE); Möllgaard, Nis-Anton, 73614 Schorndorf (DE); Resag, Uwe, 72631 Aichtal (DE)
(74) Vertreter: m patent group

(56) Entgegenhaltungen:
- DE-A1-102004 039 807
- US-A- 4 748 738
- US-A1- 2005 246 886

## Beschreibung

Die Erfindung betrifft ein Verfahren und eine Vorrichtung zum Anbringen von Magneten auf Bauteilen aus magnetischen Werkstoffen.

Das erfindungsgemäße Verfahren und die entsprechende Vorrichtung werden insbesondere zur Herstellung von Rotoren mit Permanentmagneten für Elektromotoren, insbesondere für Elektromotoren für Aufzüge, bereitgestellt.

Seit einigen Jahren werden für Aufzugsantriebe Motoren mit Rotoren verwendet, die mit Permanentmagneten bestückt sind. Dabei können die Rotoren als Innenläufer mit an der Außenseite angebrachten Permanentmagneten, oder als Außenläufer mit an der Innenseite angebrachten Permanentmagneten ausgebildet sein. Um den Rotor ordnungsgemäß mit Permanentmagneten zu bestücken, ist ein verhältnismäßig großer Aufwand erforderlich.

Ein bekanntes Verfahren sieht vor, dass auf die Rotoroberfläche bspw. Kunststoffolien oder Aluminiumstreifen aufgeklebt werden, die mit Aussparungen mit der jeweiligen Magnetform versehen worden sind. Dann wird jeweils auf die Rückseite der Magnete ein Klebstoff aufgebracht und diese einzeln in die Aussparungen eingelegt. Dabei muss darauf geachtet werden, dass die Magnete trotz ihrer Magnetkraft richtig und sauber in ihre Aussparungen eingefügt werden, da sie unmittelbar von der Rotorfläche und von den bereits positionierten Magneten stark angezogen werden. Da die Magnete stets mit einem kleinen Spalt von einem zum anderen Magneten angeklebt werden müssen, besteht die Gefahr eines Verrutschens und es muss bei jedem Magnet abgewartet werden, bis der Klebstoff ausgehärtet ist, bevor der nächste Magnet geklebt werden kann. Somit ist diese Art der Rotorherstellung sehr zeitaufwendig.

Aus der Druckschrift EP 1 255 343 A2 ist ein Verfahren bekannt, bei dem die Magnete in einer Reihe auf einem Ring angeordnet werden und dann so viele Ringe nebeneinander auf einem Basisringkörper befestigt werden, wie für den Motor notwendig sind. Hierbei wird erreicht, dass die Ringe mit den Magneten um einen kleinen Winkel zueinander verdreht angeordnet werden können, um Stöße im Motorrundlauf am Anfang und am Ende der Magnete zu verringern bzw. vollständig zu vermeiden. Hierbei ist jedoch nach wie vor problematisch, dass die Magnete einzeln auf den Ringen befestigt werden müssen und dass die Ringe auf dem Basiskörper unter Vermeidung von Unwuchten zu befestigen sind.

Aus einer weiteren Druckschrift EP 1 605 574 A1 ist bekannt, wie die Herstellungskosten durch Segmentierung der Rotoroberfläche in Polflächen und einer Vorabfabrikation der Polflächen verringert werden können. Hierbei wird aber bei der Montage des fertigen Rotors für jeden Pol um den Rotor herum ein geführter Arm oder ein Stellglied benötigt, was bei vielen Polen zu einem großen Aufwand führt. Zusätzlich müssen noch die Magnete auf die Polflächen aufgebracht und auf ihnen befestigt werden.

Aus der Druckschrift US 2005/246886 A1 ist ein Verfahren zum Positionieren und Befestigen von Magneten auf einem magnetischen Element eines Motors bekannt. Hierbei ist vorgesehen, dass ein aufzubringender Magnet in einer Haltevorrichtung gehalten und zu dem magnetischen Element positioniert wird, wobei der Magnet in der Haltevorrichtung durch eine anziehende Kraft gehalten wird. Durch Verringern dieser anziehenden Kraft und/oder durch Erhöhen einer Kraft, die den Magnet zu dem magnetischen Element zieht, wird ein Übergang des Magneten auf das magnetische Element erreicht.

Hier stellt sich die Aufgabe, die Herstellung eines Rotors mit Permanentmagneten zu vereinfachen und zu beschleunigen und damit deutlich kostengünstiger zu gestalten, besonders für Aufzugsantriebe.

Das erfindungsgemäße Verfahren dient zum Aufbringen mehrerer Magnete auf einem Rotor aus einem magnetischen Werkstoff gemäß Anspruch 1, bei dem die Magnete auf einer Oberfläche des Bauteils aufgebracht werden, wobei die Magnete in unmittelbarer Nähe des Bauteils, in einer Haltevorrichtung durch eine mittels Haltelementen wirkende Haltekraft gehalten, positioniert werden und durch Deaktivieren der Halteelemente die wirkende Haltekraft reduziert wird und die Magnete auf eine Oberfläche des Bauteils übergehen.

Beim Auflegen des Magneten auf den Magnetplatz in der Haltevorrichtung wird der Magnet selbst durch seine Magnetkraft an einem unter jedem Magnetplatz befindlichen bewegbaren Stift gehalten.

Es kann vorgesehen sein, dass das Verfahren zur Herstellung eines elektrischen Motors mit einem Rotor mit Magneten und mit einem Stator eingesetzt wird. Dabei werden die Magnete auf eine in Richtung des Stators weisende Oberfläche des Rotors aufgeklebt, wobei die Magnete zum Aufbringen auf die Rotoroberfläche zunächst in der Haltevorrichtung, die komplementär zu der Rotorfläche verläuft, angeordnet werden. In Ausgestaltung der Erfindung wird jeweils mindestens eine um den Polumfang reichende Magnetreihe in Taschen einer Haltevorrichtung eingelegt, mit Klebstoff versehen und dann wird die ganze Magnetreihe miteinander auf die Rotoroberfläche aufgebracht. Dabei ist vorteilhaft, dass die zum Aushärten benötigte Zeit, beispielsweise 90 Sekunden, für alle Magnete gleichzeitig und damit nur einmal anfällt. Weiterhin vorteilhaft ist, dass mit Anwendung des Verfahrens und der Haltevorrichtung ein Verrutschen der Magnete nach dem Aufbringen auf die Rotoroberfläche nicht möglich ist, da die Magnete auch nach dem Überspringen aus den Vorrichtungstaschen auf die Rotoroberfläche noch etwas in die Taschen hineinragen, da sie beispielsweise 4 mm dick sind und der Abstand Haltevorrichtung zu dem Rotor nur 3 mm beträgt.

Bei dem erfindungsgemäßen Verfahren kann nach Aufbringen einer um den Rotorumfang reichenden Magnetreihe auf die Rotoroberfläche die Haltevorrichtung mit einer neuen Magnetreihe direkt neben der bereits aufgebrachten Magnetreihe positioniert werden und dann die neue Magnetreihe neben der bereits aufgebrachten Magnetreihe aufgebracht werden.

Vorzugsweise werden die Magnete auf die Oberfläche geklebt.

Das erfindungsgemäße Verfahren wird in Ausgestaltung roboterunterstützt durchgeführt.

Erfindungsgemäß kann vorgesehen sein, dass zur Herstellung eines elektrischen Motors mit einem Rotor mit Permanentmagneten und mit einem Stator, bei dem die Permanentmagnete auf eine Oberfläche des Rotors aufzukleben sind, die in Richtung des Stators weist, die Magnete zum Aufbringen auf die Rotoroberfläche zuerst auf einer entgegengesetzte Rotorfläche geformten Vorrichtung angeordnet, dann gemeinsam in einem kleinen Abstand zur Rotorfläche positioniert und dann auf die Rotorfläche aufgebracht werden.

In Ausgestaltung der Erfindung ist vorgesehen, dass der Rotor zumindest in einem für die Klebung vorbereiteten Zustand fest positioniert ist und dass eine um dem Rotorumfang reichende Magnetreihe zum Aufbringen auf die Rotoroberfläche zuerst auf eine entgegengesetzte bzw. komplementär zu der Rotorfläche geformten Vorrichtung angeordnet wird, dann auf die freie Magnetoberfläche Kleber aufgetragen wird, dann die Vorrichtung in kurzem Abstand zur Rotorfläche positioniert wird und anschließend die Magnete gemeinsam auf die Rotorfläche aufgebracht werden.

Die Behandlung der Rotorfläche kann mit Roboterunterstützung erfolgen oder sogar nur durch einen Roboter durchgeführt werden.

Hierbei kann der Roboter den Rotor von einer Fördereinrichtung zu einem Vorbereitungsplatz bringen, die zu beklebende Rotorfläche vorbehandeln, den Rotor auf einem Magnetklebeplatz positionieren, die Vorrichtung auf einem Bestückungsplatz positionieren, auf die Magnete mit Hilfe eines Dosier- bzw. Klebegeräts Klebstoff auftragen, die Vorrichtung nahe der Rotorfläche positionieren, die Magnete von der Vorrichtung auf die Rotorfläche bringen, die Vorrichtung auf den Bestückungsplatz bringen, den Rotor von dem Magnetklebeplatz auf eine Weiterfördervorrichtung bringen, den Rotor in einer Lackierkabine positionieren, zumindest auf den mit Magneten beklebten Rotorbereich Korrosionsschutz auftragen und den Rotor auf einer Weiterfördereinrichtung ablegen.

Beim Auflegen des Magneten auf den Magnetplatz in der Haltevorrichtung wird der Magnet selbst durch seine Magnetkraft an einem unter jedem Magnetplatz befindlichen Stift gehalten. Nach dem Positionieren der Haltevorrichtung in kleinem Abstand zur Rotorfläche wird mit Ziehen des Stifts der Magnet von dem Stift gelöst und durch seine eigene Magnetkraft an die Rotorfläche gebracht und hält sich dort, bis der Kleber ausgehärtet ist.

An den Stiftenden können sogenannte Auswerfer angeordnet sein, die ein Lösen der Magnete aus den Taschen in der Haltevorrichtung unterstützen, falls die Magnete durch Maßdifferenzen in den Taschen verklemmen. Die Auswerfer ermöglichen ein definiertes Herausdrücken der Magnete aus der Vorrichtung. Dabei können zum Lösen der Magnete die unter den Magneten in Aussparungen angeordneten Stifte parallel zur Magnetfläche wenigsten teilweise aus dem Magnetbereich herausgezogen werden, so dass dann die an den Stiftenden angeordneten Auswerfer die noch nicht übergegangenen Magnete aus den Taschen lösen und dass dann die Magnete durch die eigene Magnetkraft an die Rotorfläche klappen.

Die Stifte können in Gruppen eingeteilt sein, so dass die Stifte einer Gruppe miteinander bewegt werden und dass die verschiedenen Gruppen nacheinander oder auch gleichzeitig bewegt werden.

Ein gleichzeitiges Bewegen der Stifte wird dadurch unterstützt, dass diese über ein Ende miteinander verbunden sind und so gleichzeitig bewegt werden können.

Vorzugsweise wird der Kleber fein dosiert auf die einzelnen Magnete aufgebracht, wobei die nach dem Aushärten sich ergebende Schichtdicke für die Dosierung herangezogen wird. Die erfindungsgemäße Haltevorrichtung gemäß Anspruch 6 dient zum Aufbringen von mehreren Magneten. Die beschriebene Vorrichtung wird insbesondere zur Durchführung eines vorstehend beschriebenen Verfahrens eingesetzt. Die Haltevorrichtung umfaßt einen Oberflächenbereich, der zu einer Oberfläche eines Bauteils, auf dem die Magnete aufzubringen sind, komplementär ausgebildet ist, wobei deaktivierbare Halteelemente zum Wirkenlassen oder Ausüben einer Kraft auf die Magnete, die auf dem Oberflächenbereich anzuordnen sind, vorgesehen sind. Der Oberflächenbereich der Vorrichtung ist derart bemessen, dass für eine um einen Rotorumfang vorgesehene Magnetreihe Plätze vorgesehen sind und unter jedem Magnetplatz ein bewegbarer Stift als Halteelement angeordnet ist.

Weiterhin ist auf dem Oberflächenbereich der Vorrichtung in Ausgestaltung mindestens eine Führung für den mindestens einen Magneten vorgesehen.

Zumindest der Oberflächenbereich der Vorrichtung kann aus einem nichtmagnetischen Werkstoff und das mindestens eine Halteelement aus einem magnetischen Werkstoff bestehen.

Bei vormagnetisierten Magneten kann der Magnet sich beim Einlegen in die Vorrichtung an dem Stift aus magnetischem Material halten.

In Ausgestaltung der Erfindung ist mittels einer Hülse die Haltevorrichtung an einer Nabe eines Rotors in einem kleinen Abstand zu einer Rotorfläche positionierbar. Die axialen Längen von Rotor, Haltevorrichtung und Rotorhaltevorrichtung mit Hülse sind dabei dergestalt, dass die radial richtige Position der Haltevorrichtung erreicht ist, bevor die an der Haltevorrichtung angeordneten Magnete in eine Überdeckungsposition mit der zu beklebenden Rotoroberfläche gelangen.

Die Vorrichtung zur Durchführung des Verfahrens weist in Ausgestaltung einen Vorrichtungskörper auf, der einen Oberflächenbereich mit zu einer mit Magneten zu bestückenden Rotorfläche passender, in kleinem Abstand dazu komplementärer Form besitzt, wobei auf dieser Oberfläche zumindest für eine um den Rotorumfang vorgesehene Magnetreihe Plätze vorgesehen sind in Form von Taschen mit der Tiefe der Magnetdicke und unter jedem Magnetplatz ein bewegbarer Stift als Halteelement angeordnet ist zum Halten des in die Tasche einzulegenden Magneten. Dabei ist der Stift unter der Tasche so angeordnet, dass er in Längsrichtung bewegbar ist und mit seiner Außenfläche die Taschenoberfläche gerade erreicht und somit einen in der Tasche liegenden Magneten mit einem dünnen Streifen seiner Oberfläche gerade berührt. Nach Deaktivieren bzw. Entfernen des Stifts von der Magnetunterfläche wird der Magnet nicht mehr an der Haltevorrichtung gehalten.

Es ist insbesondere vorteilhaft, zur Durchführung der Rotorherstellung Roboter einzusetzen. Dabei wird der Rotor durch den Roboter bspw. von einer zu liefernden Fördervorrichtung auf einen Vorbereitungsplatz gehoben. Die auf einem Bestückungsplatz positionierte Vorrichtung wird in der Zwischenzeit vorteilhaft von einem Mitarbeiter mit Magneten bestückt, indem dieser die Magnete in den Taschen positioniert und dabei mit Sichtkontrolle auf Brüche, Beschädigungen und Korrosion überprüft. Die Bestückung mit Magneten könnte ebenfalls vom Roboter durchgeführt werden. Dann bringt der Roboter mit Hilfe eines Klebegeräts Kleber auf die Magnete in der Vorrichtung. Dabei ist vorteilhaft, wenn das Klebegerät ein Dosiergerät aufweist, das über Druck und Zeit die auf einen Magneten aufzutragende Klebemenge dosiert, während der Roboter die entsprechenden Bewegungen ausführt, um den Kleber dünn und gleichmäßig auf dem Magneten zu verteilen. Nach dem Verteilen des Klebers bringt der Roboter die Vorrichtung zum Rotor und positioniert sie nahe der Rotorfläche, so dass die Magnete direkt gegenüber den für sie vorgesehenen Plätzen auf der Rotoroberfläche positioniert sind. Dann zieht der Roboter die die Magnete in der Vorrichtung haltenden Stifte aus ihrer Halteposition und mit den Auswerfern an den Enden der Stifte werden die Magnete von ihrem Vorrichtungsplatz gelöst und springen auf die Rotoroberfläche. Nach Abwarten der Klebstoffaushärtezeit, die z.B. 90 Sek. betragen kann, bringt der Roboter die Vorrichtung zurück auf den Bestückungsplatz und dann den Rotor vom Magnetklebeplatz auf eine Weiterfördervorrichtung. Danach wird der Rotor vom Roboter in einer Lakkierkabine positioniert und der Roboter trägt zumindest auf den Bereich der mit Magneten versehenen Rotorfläche Lack auf, um die Magnete vor Korrosion zu schützen. Dann wird der Rotor vom Roboter auf eine weitere Fördereinrichtung gebracht.

In Ausgestaltung weist die Vorrichtung an der Oberfläche, auf der die Magnete anzuordnen sind, Magnetplätze in Form von Taschen auf, die der Form der Magnete entsprechen und als Führung dienen können. Vorzugsweise passen die Magnete genau in diese Taschen.

Auf der der zum Rotor zeigenden Seite der Tasche entgegengesetzten Seite der Tasche ist in der Haltevorrichtung in axialer Richtung eine Aussparung für einen in axialer Richtung darin verschiebbaren Stift als Halteelement angeordnet.

Die Stifte können in Gruppen eingeteilt sein und die Stifte einer Gruppe miteinander über ein Ende verbunden sein und mittels der Verbindung miteinander bewegbar sein.

In Ausgestaltung weisen die Stifte an ihrem unter der Tasche angeordneten Ende einen vorzugsweise nicht magnetischen Auswerfer auf, der über die den Magneten zugewandte Seite des Stifts hinausragt.

Die Haltevorrichtung, die über mindestens einen Bereich ihrer Innen- oder ihrer Außenkontur im Verhältnis zu der zu beklebenden Rotorfläche positionierbar ist, ist vorzugsweise direkt an der Innen- oder der Außenkontur des Rotors positionierbar.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern im Umfang der beigefügten Patentansprüche auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im folgenden unter Bezugnahme auf die Zeichnung ausführlich beschrieben.
- Figur 1: zeigt einen Ausschnitt aus einer Haltevorrichtung in schematischer Darstellung.
- Figur 2a: zeigt eine Haltevorrichtung in Draufsicht.
- Figur 2b: zeigt eine Seitenansicht der Haltevorrichtung nach Figur 2a.
- Figur 3: zeigt einen Schnitt durch Rotor und Haltevorrichtung gemäß dem Schritt entlang der Linie A-A in Figur 2a.
- Figur 4: zeigt an eine Haltevorrichtung angebrachte Magnete mit einer weiteren Ausbildung der "Taschen".
- Figur 5: zeigt einen horizontalen Schnitt durch eine Tasche mit Stiftführung.

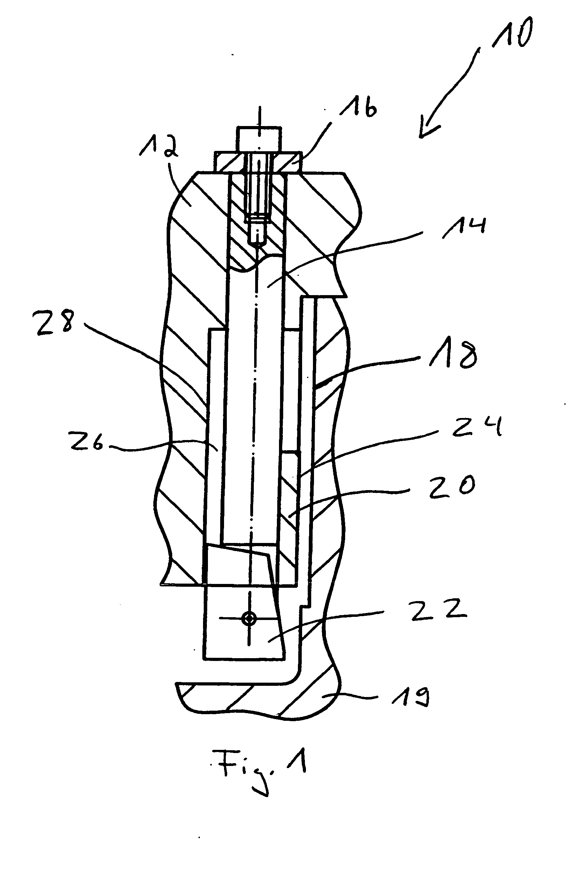

In Figur 1 ist schematisch ein Ausschnitt aus einer Haltevorrichtung dargestellt, die insgesamt mit der Bezugsziffer 10 bezeichnet ist. Zu erkennen ist ein Vorrichtungskörper 12, ein magnetischer Stift 14, eine Verbindung 16 für Stifte 14, eine zu beklebende Rotorfläche 18 eines Rotors 19, eine Magnetplatte 20 und ein nichtmagnetischer Auswerfer 22.

Die Magnetplatte 20 hält sich zunächst mit ihrer eigenen Magnetkraft an dem Stift 14 in dem Vorrichtungskörper 12. Durch Hochziehen des Stifts 14 verringert sich die Überdekkungsfläche und damit die magnetische Anziehungskraft zwischen Magnetplatte 20 und Stift 14. Die Magnetplatte 20 springt zu der Oberfläche 18 des Rotors 19 über, zusätzlich noch durch den nichtmagnetischen Auswerfer 22 unterstützt. Die dem Rotor 19 zugewandte Fläche 24 der Magnetplatte 20 ist mit Klebstoff bestrichen.

Eine Aussparung 26, in der der Stift 14 aufgenommen ist, bietet eine Gleit- bzw. Lauffläche 28 für den Auswerfer 22.

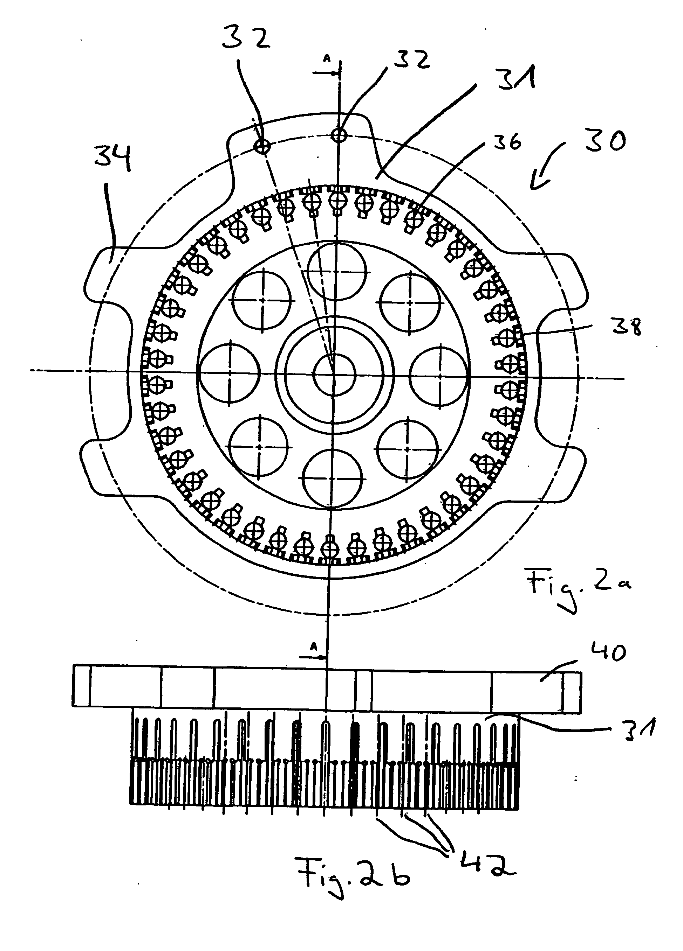

In Figur 2a ist eine erfindungsgemäße Haltevorrichtung 30 mit einem Vorrichtungskörper 31 in Draufsicht dargestellt. Hierbei sind Bohrungen 32 zum Ausrichten des Magnetreihenversatzes und ein Handgriff 34 zum manuellen Ausrichten der Vorrichtung 30 zu erkennen, wobei der Handgriff 34 an der Auflagenplatte 40 ausgebildet ist. Weiterhin sind Aussparungen 36 für Stifte und Taschen 38 für aufzubringende Magnete dargestellt.

In Figur 2b ist eine Seitenansicht der Haltevorrichtung 30 dargestellt. Hierbei sind der Vorrichtungskörper 31 mit der Auflageplatte 40 und Magnetplätze 42 wiedergegeben.

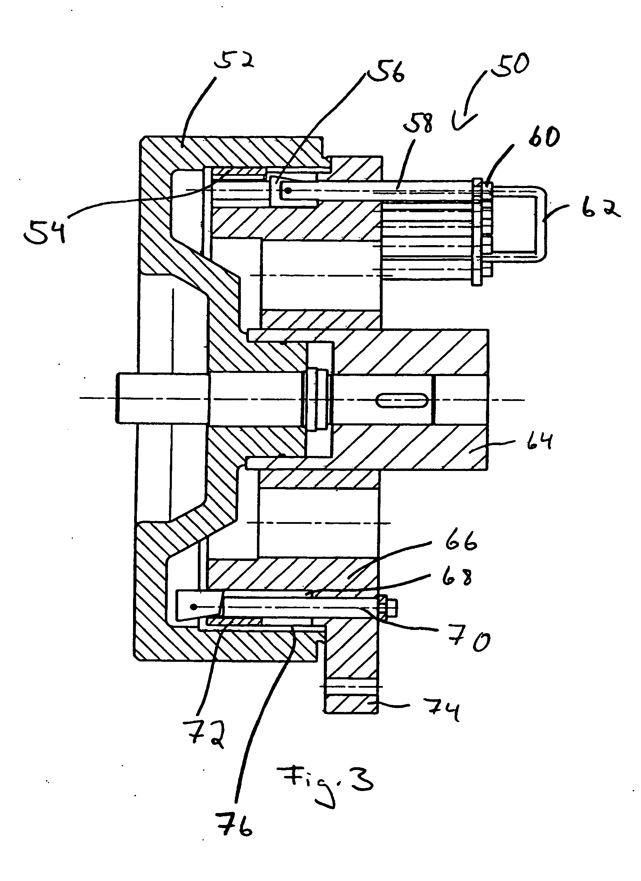

Ein Ausschnitt einer weiteren Haltevorrichtung 50 ist in Figur 3 dargestellt. Es sind ein Rotor 52, ein an dem Rotor 52 übersprungener Magnet 54, ein Auswerfer 56, ein ausgezogener Stift 58, eine Verbindung 60 von Stiften 58, ein Griff 62 zum Herausziehen der Stifte 58, eine Hülse 64, ein Vorrichtungskörper 66, eine Aussparung 68, ein eingeschobener Stift 70, ein an der Haltevorrichtung 50 sich haltender Magnet 72 und eine Auflageplatte 74 zu erkennen. Deutlich wird ein kleiner Abstand 76 zwischen Rotorfläche und Magnet 72, der etwa 3 mm beträgt.

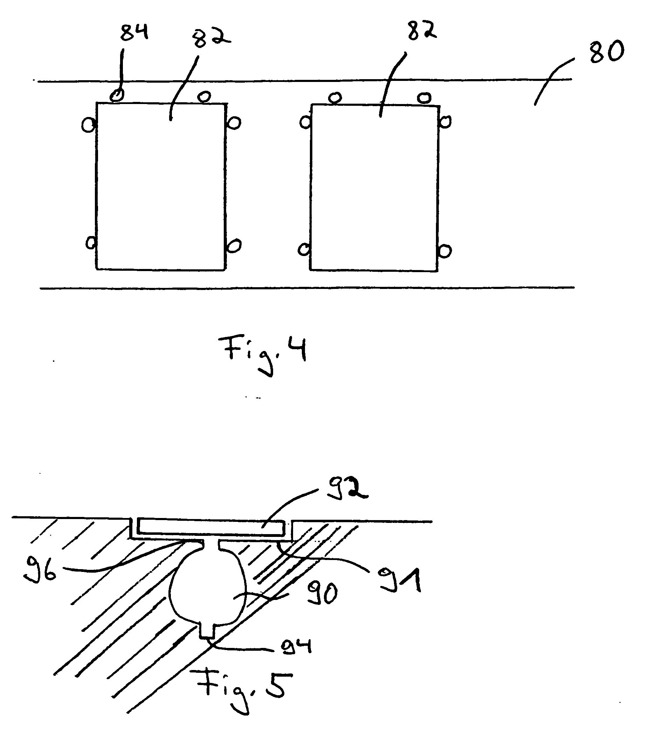

Figur 4 zeigt zwei an einer Haltevorrichtung 80 angebrachte Magnete 82. Diese Magnete sind mittels eines (nicht dargestellten) Halteelements an der Haltevorrichtung 80 gehalten und mittels Stiften 84 positioniert. Diese Stifte 84, die jeweils eine Tasche für den betreffenden Magneten 82 bilden, bieten eine Führung für den Magneten 82. Das heißt, diese sind ausreichend lang, z.B. mit der Höhe der Magnetdicke, dass die Magnete 82 nach Übergang von der Haltevorrichtung 80 auf einen (nicht dargestellten) Rotor immer noch zwischen den Stiften 84 geführt sind. Nach Ablauf der Aushärtezeit des verwendeten Klebstoffs kann die Haltevorrichtung 80 nach oben bewegt werden, so dass die Magnete 82 aus den durch die Stifte 82 gebildeten Taschen gelangen.

In Figur 5 ist eine Aussparung 90 zur Aufnahme des (nicht dargestellten) Stifts dargestellt. Ist der Stift in die Aussparung 90 eingeschoben, wird ein Magnet 92 durch magnetische Anziehung mittels des Stifts gehalten. Dabei kann der Stift den Magneten 92 berühren oder es kann ein schmaler Spalt zwischen Magnet 92 und Stift vorliegen.

Die Darstellung zeigt weiterhin eine Lauffläche 94 für den an dem Stift angebrachten Auswerfer 56 und eine Stufe 96 für einen sauberen Übergang von der Aussparung 90 zur Tasche 91.

## Patentansprüche

1. Verfahren zum Aufbringen mehrerer Magnete (54, 72, 82, 92) auf einem Rotor (19, 52) aus einem magnetischen Werkstoff,
- Einbringen der Magnete (54, 72, 82, 92) in eine Haltevorrichtung (10, 30, 50, 80), in der sie durch eine mittels Halteelemente wirkende Haltekraft gehalten werden, wobei die Magnete (54, 72, 82, 92) jeweils eine Magnetoberfläche und eine Magnetunterfläche aufweisen und mit ihren Magnetunterflächen auf in der Haltevorrichtung (10, 30, 50, 80) vorgesehene Magnetplätze aufgelegt werden, wodurch die Magnete (54, 72, 82, 92) durch ihre Magnetkraft mit ihren Magnetunterflächen an einem unter jedem Magnetplatz befindlichen bewegbaren Stift (14, 58, 70) als Halteelement gehalten werden,
- Positionieren der Haltevorrichtung in unmittelbarer Nähe des Rotors (19, 52),
- Deaktivieren der Halteelemente, derart dass die wirkende Haltekraft reduziert wird und die Magnete (54, 72, 82, 92) mit ihrer Magnetoberfläche auf eine Oberfläche des Rotors (19, 52) übergehen,
wobei auf der zum Rotor (19, 52) entgegengesetzten Seite in der Haltevorrichtung (10, 30, 50, 80) die Stifte (14, 58, 70) in axialer Richtung des Rotors (19, 52) und parallel zu den Magnetflächen verschiebbar angeordnet sind.

2. Verfahren nach Anspruch 1, das zur Herstellung eines elektrischen Motors mit einem Rotor (19, 52) mit Magneten (54, 72, 82, 92) und mit einem Stator eingesetzt wird, wobei die Magnete (54, 72, 82, 92) auf einer in Richtung des Stators weisenden Oberfläche aufgebracht werden, wobei die Magnete (54, 72, 82, 92) zum Aufbringen auf die Rotoroberfläche (18) zunächst in der Haltevorrichtung (10, 30, 50, 80), die komplementär zu der Rotorfläche (18) ausgebildet ist, eingesetzt werden.

3. Verfahren nach Anspruch 1 oder 2, bei dem nach dem Aufbringen einer um den Rotorumfang reichenden Magnetreihe auf die Rotoroberfläche (18) die Haltevorrichtung (10, 30, 50, 80) mit einer neuen Magnetreihe direkt neben der bereits aufgebrachten Magnetreihe positioniert wird und dann die neue Magnetreihe neben der bereits aufgebrachten Magnetreihe aufgebracht wird.

4. Verfahren nach einem der Ansprüche 1 bis 3, bei dem die Magnete (54, 72, 82, 92) auf die Oberfläche geklebt werden.

5. Verfahren nach einem der Ansprüche 1 bis 4, das roboterunterstützt durchgeführt wird.

6. Haltevorrichtung zum Aufbringen von mehreren Magneten (54, 72, 82, 92), insbesondere zur Durchführung eines Verfahrens nach einem der Ansprüche 1 bis 5, die einen Oberflächenbereich umfasst, der zu einer Oberfläche eines Rotors (19, 52), auf die die jeweils eine Magnetoberfläche und eine Magnetunterfläche aufweisenden Magnete (54, 72, 82, 92) mit ihrer Magnetoberfläche aufzubringen sind, komplementär ausgebildet ist, wobei deaktivierbare Halteelemente zum Wirkenlassen oder Ausüben einer Kraft auf die Magnete (54, 72, 82, 92), wenn diese auf dem Oberflächenbereich angeordnet sind, vorgesehen sind, **dadurch gekennzeichnet, dass** der Oberflächenbereich derart bemessen ist, dass für eine um einen Rotorumfang vorgesehene Magnetreihe Magnetplätze vorgesehen sind und unter jedem Magnetplatz ein bewegbarer Stift (14, 58, 70) als Halteelement zum Halten der Magnetunterflächen der Magnete (54, 72, 82, 92) mittels Magnetkraft angeordnet ist, wobei auf der zum Rotor (19, 52) entgegengesetzten Seite in der Haltevorrichtung (10, 30, 50, 80) die Stifte (14, 58, 70) in axialer Richtung des Rotors (19, 52) und parallel zu den Magnetflächen verschiebbar angeordnet sind.

7. Haltevorrichtung nach Anspruch 6, bei der auf dem Oberflächenbereich Führungen für die Magnete (54, 72, 82, 92) vorgesehen sind.

8. Haltevorrichtung nach einem der Ansprüche 6 oder 7, bei der zumindest der Oberflächenbereich aus einem nichtmagnetischen Werkstoff und die Halteelemente aus einem magnetischen Werkstoff bestehen.

9. Haltevorrichtung nach einem der Ansprüche 6 bis 8, die mittels einer Hülse (64) an einer Nabe eines Rotors (19, 52) in einem kleinen Abstand zu einer Rotorfläche (18) positionierbar ist.

10. Haltevorrichtung nach einem der Ansprüche 6 bis 9, mit einem Vorrichtungskörper (12, 31, 66), der über mindestens einen Bereich seiner Innen- oder seiner Außenkontur im Verhältnis zur zu beklebenden Rotorfläche (18) positionierbar ist.

11. Haltevorrichtung nach einem der Ansprüche 6 bis 10, bei der der Vorrichtungskörper (12, 31, 66) direkt an der Innen- oder der Außenkontur des Rotors positionierbar ist.

## Claims

1. Method for mounting a plurality of magnets (54, 72, 82, 92) on a rotor (19, 52) made of a magnetic material,
- placing the magnets (54, 72, 82, 92) in a holding apparatus (10, 30, 50, 80) in which they are held by a holding force applied by holding elements, wherein the magnets (54, 72, 82, 92) each have a magnetic top and a magnetic bottom and are placed with their bottoms on magnet locations provided in the holding apparatus (10, 30, 50, 80), whereby the magnets (54, 72, 82, 92) are held by their magnetic force with their magnetic bottoms on a holding element in the form of a movable pin (14, 58, 70) located under each magnet location,
- positioning the holding apparatus in the immediate vicinity of the rotor (19, 52),
- deactivating the holding elements such that the effective holding force is reduced and the magnets (54, 72, 82, 92) are transferred by their magnetic tops to a surface of the rotor (19, 52),
wherein on the opposite side to the rotor (19, 52), in the holding apparatus (10, 30, 50, 80), the pins (14, 58, 70) are arranged to be movable in the axial direction of the rotor (19, 52) and parallel to the magnetic surfaces.

2. Method according to claim 1, which is used to manufacture an electric motor having a rotor (19, 52) with magnets (54, 72, 82, 92) and with a stator, wherein the magnets (54, 72, 82, 92) are applied to a surface facing in the direction of the stator, wherein in order to apply them to the rotor surface (18) the magnets (54, 72, 82, 92) are first of all inserted in the holding apparatus (10, 30, 50, 80) which is configured to be complementary to the rotor surface (18).

3. Method according to claim 1 or 2, wherein, after the application of a row of magnets around the periphery of the rotor surface (18), the holding apparatus (10, 30, 50, 80) with a new row of magnets is positioned directly adjacent to the row of magnets already applied and then the new row of magnets is applied adjacent to the row of magnets already applied.

4. Method according to one of claims 1 to 3, wherein the magnets (54, 72, 82, 92) are adhesively bonded to the surface.

5. Method according to one of claims 1 to 4, which is carried out with the assistance of a robot.

6. Holding apparatus for applying a plurality of magnets (54, 72, 82, 92), particularly in order to carry out a method according to one of claims 1 to 5, which comprises a surface region configured to be complementary to a surface of a rotor (19, 52) onto which the magnets (54, 72, 82, 92) each comprising a magnetic top and a magnetic bottom are to be applied by their magnetic top, wherein deactivatable holding elements are provided for allowing or carrying out the exertion of a force on the magnets (54, 72, 82, 92) when the said magnets are arranged on the surface region, **characterised in that** the surface region is of such dimensions that magnet locations are provided for a row of magnets provided around the periphery of a rotor, and under each magnet location a movable pin (14, 58, 70) is arranged as a holding element for holding the magnetic bottoms of the magnets (54, 72, 82, 92) by magnetic force, while on the opposite side from the rotor (19, 52), in the holding apparatus (10, 30, 50, 80), the pins (14, 58, 70) are arranged to be movable in the axial direction of the rotor (19, 52) and parallel to the magnetic surfaces.

7. Holding apparatus according to claim 6, wherein guides for the magnets (54, 72, 82, 92) are provided on the surface region.

8. Holding apparatus according to one of claims 6 or 7, wherein at least the surface region consists of a nonmagnetic material and the holding elements consist of a magnetic material.

9. Holding apparatus according to one of claims 6 to 8, which can be positioned by means of a sleeve (64) on a hub of a rotor (19, 52) at a short distance from a rotor surface (18).

10. Holding apparatus according to one of claims 6 to 9, having an apparatus body (12, 31, 66) which can be positioned over at least a part of its inner or outer contour in relation to the rotor surface (18) that is to be adhesively bonded.

11. Holding apparatus according to one of claims 6 to 10, wherein the apparatus body (12, 31, 66) can be positioned directly on the inner or outer contour of the rotor.

## Revendications

1. Procédé pour monter une pluralité d'aimants (54, 72, 82, 92) sur un rotor (19, 52) constitué d'un matériau magnétique, consistant à :
- placer les aimants (54, 72, 82, 92) dans un appareil de maintien (10, 30, 50, 80) dans lequel ils sont maintenus par une force de maintien appliquée par des éléments de maintien, dans lequel chacun des aimants (54, 72, 82, 92) a une partie supérieure magnétique et une partie inférieure magnétique et sont placés avec leur partie inférieure sur des emplacements d'aimant prévus dans l'appareil de maintien (10, 30, 50, 80), de sorte que les aimants (54, 72, 82, 92) sont maintenus par leur force magnétique avec leurs parties inférieures magnétiques sur un élément de maintien sous la forme d'une broche mobile (14, 58, 70) positionnée sous chaque emplacement d'aimant,
- positionner l'appareil de maintien à proximité immédiate du rotor (19, 52),
- désactiver les éléments de maintien de sorte que la force de maintien réelle est réduite et les aimants (54, 72, 82, 92) sont transférés par leurs parties supérieures magnétiques vers une surface du rotor (19, 52),
dans lequel sur le côté opposé du rotor (19, 52) dans l'appareil de maintien (10, 30, 50, 80), les broches (14, 58, 70) sont disposées pour être mobiles dans la direction axiale du rotor (19, 52) et parallèles aux surfaces magnétiques.

2. Procédé selon la revendication 1, lequel est utilisé pour fabriquer un moteur électrique ayant un rotor (19, 52) avec des aimants (54, 72, 82, 92) et avec un stator, dans lequel les aimants (54, 72, 82, 92) sont appliqués à une surface placée en vis-à-vis dans la direction du stator, dans lequel afin de les appliquer à la surface du rotor (18) les aimants (54, 72, 82, 92) sont tout d'abord tous insérés dans l'appareil de maintien (10, 30, 50, 80) lequel est configuré pour être complémentaire à la surface du rotor (18).

3. Procédé selon la revendication 1 ou 2, dans lequel, après l'application d'une rangée d'aimants autour de la périphérie de la surface du rotor (18), l'appareil de maintien (10, 30, 50, 80) avec une nouvelle rangée d'aimants est positionné directement à proximité adjacente de la rangée d'aimants déjà appliquée et ensuite la nouvelle rangée d'aimants est appliquée à proximité adjacente de la rangée d'aimants déjà appliquée.

4. Procédé selon l'une quelconque des revendications 1 à 3, dans lequel les aimants (54, 72, 82, 92) sont liés de manière adhésive à la surface.

5. Procédé selon l'une des revendications 1 à 4, lequel est mis en oeuvre avec l'aide d'un robot.

6. Appareil de maintien pour appliquer une pluralité d'aimants (54, 72, 82, 92), particulièrement afin de mettre en oeuvre un procédé selon l'une des revendications 1 à 5, lequel comporte une région de surface configurée pour être complémentaire à une surface d'un rotor (19, 52) sur lequel les aimants (54, 72, 82, 92) chacun d'entre eux comportant une partie supérieure magnétique et une partie inférieure magnétique peuvent être appliqués par leur partie supérieure magnétique, dans lequel des éléments de maintien pouvant être désactivés sont fournis pour permettre ou effectuer l'application d'une force sur les aimants (54, 72, 82, 92) lorsque lesdits aimants sont disposés sur la région de surface, **caractérisé en ce que** la région de surface présente des dimensions de sorte que des emplacements d'aimant sont prévus pour une rangée d'aimants agencés autour de la périphérie d'un rotor, et sous chaque emplacement d'aimant une broche mobile (14, 58, 70) est disposée en tant qu'élément de maintien pour maintenir les parties inférieures magnétiques des aimants (54, 72, 82, 92) par l'intermédiaire d'une force magnétique, alors que sur le côté opposé du rotor (19, 52), dans l'appareil de maintien (10,30, 50, 80), les broches (14, 58, 70) sont disposées pour être mobiles dans la direction axiale du rotor (19, 52) et parallèles aux surfaces magnétiques.

7. Appareil de maintien selon la revendication 6, dans lequel des guides pour les aimants (54, 72, 82, 92) sont fournis sur la région de surface.

8. Appareil de maintien selon l'une revendication 6 ou 7, dans lequel au moins la région de surface est constituée d'un matériau non magnétique et les éléments de maintien sont constitués d'un matériau magnétique.

9. Appareil de maintien selon l'une des revendications 6 à 8, lequel peut être positionné par l'intermédiaire d'un manchon (64) sur un moyeu d'un rotor (19, 52) à une courte distance d'une surface du rotor (18).

10. Appareil de maintien selon l'une des revendications 6 à 9, ayant un corps d'appareil (12, 31, 66) qui peut être positionné sur au moins une partie de son contour intérieur ou extérieur en relation à la surface du rotor (18) qui doit être liée de manière adhésive.

11. Appareil de maintien selon l'une des revendications 6 à 10, dans lequel le corps d'appareils (12, 31, 66) peut être positionné directement sur le contour intérieur ou extérieur du rotor.
